# EUROPÄISCHE PATENTSCHRIFT

(11) **EP 0 866 086 B1**
(45) Veröffentlichungstag und Bekanntmachung des Hinweises auf die Patenterteilung: **23.07.2003**
(21) Anmeldenummer: 98104137.9
(22) Anmeldetag: 09.03.1998
(51) Int. Cl.: C08G 77/50, C08G 77/60

(54) **Verfahren zur Herstellung SiOH-funktioneller Carbosilan-Dendrimere**
Process for the preparation of SiOH-funktional carbosilane dendrimers
Procédé de préparation de dendrimères de carbosilane à fonctions SiOH

(30) Priorität: 20.03.1997 DE 19711650
(43) Veröffentlichungstag der Anmeldung: 23.09.1998
(73) Patentinhaber: BAYER AG, 51368 Leverkusen (DE)
(72) Erfinder: Kraus, Harald, Dr., 51375 Leverkusen (DE); Mechtel, Markus, Dr., 50937 Köln (DE)

(56) Entgegenhaltungen:
- EP-A- 0 743 313
- US-A- 5 378 790
- S. PAWLENKO: "SILANOLE" METHODEN DER ORGANISCHEN CHEMIE (HOUBEN WEYL), Bd. 13, Nr. 5, 1980, Seiten 135-138, XP002095337 STUTTGART, NEW YORK : THIEME; DE

## Beschreibung

Die vorliegende Erfindung betrifft ein Verfahren zur Herstellung SiOH-funktioneller Carbosilan-Dendrimere.

Als Dendrimere bezeichnet man stark verzweigte Moleküle mit hochgeordneter meist dreidimensionaler Struktur, deren Molmasse im Bereich derer von Oligomeren oder Polymeren liegt.

Dendrimere haben jedoch den Vorteil, daß sie mit exakt einheitlicher Molmasse gezielt aufgebaut werden können, während die üblichen Polymere stets eine bestimmte Molmassenverteilung zeigen. Zudem sind bestimmte funktionelle Dendrimere mit einer definierten Anzahl reaktiver Endgruppen herstellbar.

Aus DE A 196 03 242 und DE A 196 03 241 sind SiOH-funktionelle Carbosilan-Dendrimere bekannt. Diese werden zum Beispiel für die Herstellung organischanorganischer Hybridmaterialien und Lacken (DE A 196 03 242) zur Anbindung katalytisch aktiver Metallverbindungen (DE A 196 32 700) oder als Vernetzer in kondensationsvernetzenden Organopolysiloxanmassen (DE A 196 03 241) verwendet.

Gemäß DE A 196 03 242 und DE A 196 03 241 werden die SiOH-funktionellen Carbosilan-Dendrimere durch Umsetzung der entsprechenden SiHalogenfunktionellen Carbosilan-Dendrimere mit Wasser in Gegenwart einer Base in einem unpolaren Lösungsmittel hergestellt. Als Basen werden dabei Triorganoamine, bevorzugt Trialkylamine, als unpolare Lösungsmittel aliphatische Ether eingesetzt.

Nachteilig bei dieser Umsetzung ist jedoch, daß das als Nebenprodukt anfallende Trialkylaminhydrochlorid als hochvoluminöser Feststoff ausfällt und anschließend mühsam abfiltriert werden muß. Dieser erschwert oder verhindert während der Umsetzung eine gleichmäßige Durchmischung des Reaktionsgemisches, so daß infolge von Konzentrations- und Temperaturgradienten Nebenreaktionen begünstigt werden, die zu Oligomerbildung führen.

Das in DE A 196 03 242 und DE A 196 03 241 beschriebene Verfahren ist daher aufgrund der genannten Nachteile, der Aufwendigkeit der Verfahrensschritte und der extrem geringen Raum-Zeit-Ausbeute für eine technische Herstellung der SiOH-fünktionellen Carbosilan-Dendrimere äußerst ungünstig.

Es bestand daher ein großer Bedarf, ein Verfahren zur Herstellung von SiOH-funktionellen Carbosilan-Dendrimeren bereitzustellen, das die im Stand der Technik bekannten Nachteile nicht aufweist.

Es wurde nun gefunden, daß die genannten Nachteile durch Ausnutzung der unterschiedlichen Löslichkeitseigenschaften von Produkt und Nebenprodukt vermieden werden können.

Gegenstand der Erfindung ist daher ein Verfahren zur Herstellung von Carbosilan-Dendrimeren der Formel (I)

K[(CH₂)ₙSiXₐR₃₋ₐ]ᵢ (I)

mit n = 2-6, bevorzugt n = 2, und R = C₁-C₁₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:
A)

   K = [R₄₋ᵢSi]

   mit i = 3-4, bevorzugt 4
   oder
B) K = 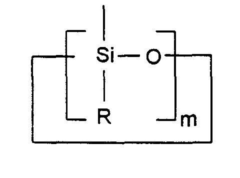 mit i = m = 3-6, bevorzugt i = m = 4
   und
   a)

      X = (OH)

      und a = 1
      oder
   b)

      X = [(CH₂)ₙSi(OH)R₂]

      und a = 1-3, bevorzugt a = 3
      oder
   c)

      X = [(CH₂)ₙSiR₃₋ₐ[(CH₂)ₙSi(OH)R₂]ₐ]

      und a = 1-3, bevorzugt a = 3
      oder
   d)

      X = [(CH₂)ₙSiR₃₋ₐ[(CH₂)ₙSiR₃₋ₐ[(CH₂)ₙSi(OH)R₂]ₐ]ₐ]

      und a = 1-3,
      bevorzugt a = 3
   durch die Umsetzung von Carbosilan-Dendrimeren der Formel (II)

   K[(CH₂)ₙSiYₐR₃₋ₐ]ᵢ (II)

   mit n = 2-6, bevorzugt n = 2, und R = C₁-C₁₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:

A)

   K = [R₄₋ᵢSi]

   mit i = 3-4, bevorzugt 4
   oder
B) K = 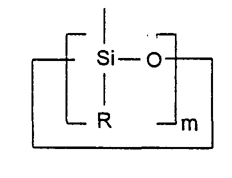 mit i = m = 3-6, bevorzugt i = m = 4
   und
   a)

      Y = Cl, Br, I

      und a = 1
      oder
   b)

      Y = [(CH₂)ₙSi(Z)R₂]

      mit Z = Cl, Br, I und a = 1-3, bevorzugt a = 3
      oder
   c)

      Y = [(CH₂)ₙSiR₃₋ₐ[(CH₂)ₙSi(Z)R₂]ₐ]

      mit Z = Cl, Br, I und a = 1-3,
      bevorzugt a = 3 oder
   d)

      Y = [(CH₂)ₙSiR₃₋ₐ[(CH₂)ₙSiR₃₋ₐ[(CH₂)ₙSi(Z)R₂]ₐ]ₐ].
   mit Z = Cl, Br, I und a = 1-3, bevorzugt a = 3
   mit Wasser in Gegenwart einer Base oder eines Basengemisches und einem organischen Lösemittel, wonach organisches Lösemittel und Wasser in einem Gewichtsverhältnis von 0,5 bis 1,4, bevorzugt von 0,9 bis 1,1, eingesetzt werden.

Die Reaktion wird somit als Zweiphasenreaktion durchgeführt, d.h. die Hydrolyse findet an der Phasengrenzfläche eines Zweiphasengemisches statt, bestehend aus einer organischen Phase, in der sich sowohl die SiHalogen-haltigen Carbosilan-Dendrimere der Formel (II) (Edukte) als auch die SiOH-funktionellen Carbosilan-Dendrimere der Formel (I) (Produkte) lösen, und einer wäßrigen Phase, in der Base und das während der Reaktion gebildete Salz gelöst sind.

Als Lösungsmittel der organischen Phase im Sinne der Erfindung kommen alle organischen Lösungsmittel und/oder Lösungsmittelgemische in Betracht, die nicht vollständig mit Wasser mischbar sind. Das Lösungsmittelgemisch kann gegebenenfalls ein- oder mehrphasig sein. Bevorzugt werden aliphatische Ether eingesetzt, besonders bevorzugt tert.-Butylmetylether.

Als Basen im Sinne der Erfindung sind alle wasserlöslichen Basen und deren Gemische, wie z.B. NH₃, Alkalihydroxide, Ammonium- und Alkalicarbonate, -hydrogencarbonate, -phosphate, -hydrogenphosphate und/oder -acetate einsetzbar. Bevorzugt eingesetzt werden NH₃, Alkalihydroxide, Alkalicarbonate und/oder Alkalihydrogencarbonate, besonders bevorzugt NH₃.

Die Basen werden, bezogen auf die bei der Hydrolyse freigesetzte Menge an Säure, vorzugsweise stöchiometrisch oder im Überschuß, bei NH₃ als Base bevorzugt im zwei- bis zehnfachen Überschuß, eingesetzt.

Bevorzugt wird das erfindungsgemäße Verfahren bei Temperaturen ≥0°C durchgeführt, besonders bevorzugt zwischen 0°C und 50°C.

Die Verbindungen der Formel (II) können gemäß DE A 196 03 242 und DE A 196 03 241 durch Hydrosilylierungsreaktionen hergestellt werden, d.h. durch die Umsetzung geeigneter ungesättigter Silane mit Hydridosilanen, wie z.B. Halogensilanen, in Gegenwart eines Katalysators.

In einer besonders bevorzugten Ausführungsform der Erfindung werden die Carbosilan-Dendrimere der Formel (II) durch die Umsetzung ungesättigter Silane, wie z.B. Tetravinylsilan und Cyclo[tetra(methylvinylsiloxan)], mit Halogenhydridosilanen, wie z.B. Chlordimethylsilan in Gegenwart von homogenen Katalysatoren, vorzugsweise Platinkomplexen in vinylgruppenhaltiger Siloxanmatrix, wie z.B. dem Silopren U Katalysator Pt/S, eine 68 %ige Lösung eines mit Cyclo[tetra(methylvinylsiloxan)]-Liganden substituierten Pt-Komplexes in Isopropanol, hergestellt.

Für den Fall, daß die Hydrosilylierung bereits in einem für das erfindungsgemäße Verfahren geeigneten Lösungsmittel durchgeführt wurde, kann das dabei gebildete Reaktionsprodukt auch in situ, d. h. ohne weitere Aufarbeitung, eingesetzt werden.

Das erfindungsgemäße Verfahren kann sowohl diskontinuierlich, z.B. in einem Rührkessel, als auch kontinuierlich, z.B. in einem Strömungsrohr, durchgeführt werden. Dazu wird vorzugsweise das in einem geeigneten Lösungsmittel, bevorzugt in einem aliphatischen Ether, besonders bevorzugt in tert.-Butylmethylether, gelöste Carbosilan-Dendrimer der Formel (II) oder gegebenenfalls das Reaktionsprodukt der Hydrosilylierungsreaktion langsam zu der Zweiphasenmischung gegeben, wobei die wäßrige und die organische Phase vorzugsweise intensiv durchmischt werden. Diese Durchmischung kann z.B. im Rührkessel durch intensives Rühren oder im Strömungsrohr durch turbulentes Strömen erfolgen.

Infolge der Durchmischung wird die Reaktion an der Phasengrenzfläche begünstigt. Die bei der Hydrolyse freigesetzte Säure reagiert mit der Base bzw. dem Basengemisch zu einem Salz bzw. einem Salzgemisch, welches sich in der wäßrigen Phase löst. Das gebildete SiOH-funktionelle Carbosilan-Dendrimer der Formel (I) löst sich in der organischen Phase. Aufgrund der unterschiedlichen Löslichkeitseigenschaften der Reaktionskomponenten und der Vermeidung einer Niederschlagsbildung ist die Abtrennung und Aufarbeitung des Produktes auf einfache Weise möglich.

Nach beendeter Reaktion werden die Phasen getrennt, bei kontinuierlicher Reaktionsführung gegebenenfalls diskontinuierlich in einem separaten Reaktionsgefäß.

Vorzugsweise wird die wäßrige Phase abgetrennt und die organische Phase bei Bedarf ein- oder mehrmals mit Wasser oder einer wäßrigen Lösung eines Salzes, einer Base oder einer Säure gewaschen und anschließend von Wasserspuren befreit, z.B. durch Trocknen über wasserfreien Alkali-, Erdalkalisulfaten, Calciumchlorid und/oder Molekularsieben oder durch Destillationsverfahren.

Das gebildete SiOH-funktionelle Carbosilan-Dendrimer der Formel (I) kann durch Entfernen der flüchtigen Bestandteile, z.B. durch Kondensation oder Destillation, isoliert werden, wobei es als Feststoff oder als Öl anfällt. Falls das Produkt ein Feststoff ist, kann es auch direkt durch Eintropfen der organischen Phase in ein Lösungsmittel (Fällungsmittel) oder Lösungsmittelgemisch, in dem sich das Produkt nicht oder nur wenig löst, und anschließende Filtration, isoliert werden. Geeignete Lösungsmittel sind z.B. cyclische, aliphatische oder aromatische Kohlenwasserstoffe, wie z.B. Cyclohexan, Pentan, Hexan, Heptan, Toluol und/oder Xylol. Auch die Zugabe des Fällungsmittel zu der organischen Phase ist möglich.

Wenn das Produkt in gelöster Form weiter umgesetzt oder einer Anwendung zugeführt werden soll, kann auf das Isolieren des Produktes verzichtet und die organische Phase direkt eingesetzt werden. Auch andere Aufarbeitungsschritte sind möglich, z.B. ein Lösungsmittelaustausch durch Zugabe eines vorzugsweise höher siedenden Lösungsmittels und anschließendem Abdestillieren oder Abkondensieren des ursprünglichen Lösungsmittels oder Lösungsmittelgemisches.

Das erfindungsgemäße Verfahren wird durch die folgenden Beispiele verdeutlicht, ohne jedoch auf diese eingeschränkt zu sein.

### Ausführungsbeispiele:

### Vorbemerkung:

Mit Ausnahme der Aufarbeitungsschritte nach der Hydrolyse wurden alle Reaktionen unter Schutzgasatmosphäre (Argon) durchgeführt.

Tert.-Butylmethylether (im folgenden abgekürzt als TBME) (H₂O-Gehalt <0,05 %), n-Hexan, Diethylether, Tetravinylsilan, Cyclo[tetra(methylvinylsiloxan)], Chlordimethylsilan, NaHCO₃, Na₂CO₃, NaOH, NaCl und Na₂SO₄ wurden als käufliche Ware ohne weitere Aufarbeitung direkt eingesetzt. Die wäßrigen NH₃-Lösungen wurden durch Verdünnen einer 25 %igen wäßrigen NH₃-Lösung hergestellt.

Der heterogene Katalysator Kat. 1 (Pt-Gehalt 1 %) wurde entsprechend Beispiel 8 in DE A 196 03 242 durch Belegung von pulverförmiger Aktivkohle mit H₂PtCl₆ hergestellt.

Der Silopren U Katalysator Pt/S (eine 68 %ige Lösung eines mit Cyclo[tetra-(methylvinylsiloxan)]-Liganden substituierten Pt-Komplexes in Isopropanol) wurde von der Bayer AG (Deutschland) bezogen.
¹H-NMR wurden bei 400 MHz aufgenommen.

### Beispiel 1:

### Herstellung der Ausgangsverbindung Si[(CH₂)₂Si(CH₃)₂Cl]₄

Die Synthese erfolgte nach einem in DE A1 196 03 242 beschriebenen Verfahren:

Zu 75 g (0,550 mol) Tetravinylsilan wurden unter Argon 234,2 g (2,475 mol) Chlordimethylsilan, 500 ml TBME und 1,5 g Katalysator Kat. 1 gegeben. Unter kräftigem Rühren wurde die Reaktionsmischung so lange auf 45°C erwärmt, bis eine exotherme Reaktion einsetzte und die Temperatur auf 51°C anstieg. Anschließend wurde eine Mischung, bestehend aus 525 g (3,853 mol) Tetravinylsilan, 1639,4 g (17,327 mol) Chlordimethylsilan und 940 ml TBME langsam zugetropft, wobei darauf geachtet wurde, daß die Reaktionstemperatur nicht unter 50°C fiel. Anschließend wurde noch 1,5 h unter Rückfluß gerührt, auf Raumtemperatur abgekühlt, der Katalysator über eine Fritte abfiltriert und die farblose Lösung im Vakuum von flüchtigen Bestandteilen befreit. Das Produkt fiel als weißer Feststoff an.
Ausbeute: 2120,8 g (94 % der Theorie)

### Beispiel 2:

### Synthese von Si[(CH₂)₂Si(CH₃)₂OH]₄ mit NH₃ als Base

In einem 10-1-Planschliffgefäß mit Ablaßhahn wurden unter Argon 2,6 1 (1924 g) TBME und 2894 g einer wäßrigen NH₃-Lösung, die 473,5 g (27,8 mol) NH₃ enthielt, vorgelegt. Unter starkem Rühren, das eine intensive Durchmischung der beiden Phasen bewirkte, wurden bei Raumtemperatur langsam 720 g (1,399 mol) Si[(CH₂)₂Si(CH₃)₂Cl]₄ (aus Beispiel 1) in 800 ml (592 g) getrocknetem TBME zugetropft, wobei die Reaktionstemperatur langsam auf 38°C anstieg. Nach dem Zutropfen wurde noch 1,5 h bei Raumtemperatur gerührt, anschließend die Phasen getrennt, die organische Phase zweimal mit je 3 l Wasser gewaschen und über Na₂SO₄ getrocknet. Nach Abfiltrieren des Trocknungsmittels wurde die organische Phase in 10 l n-Hexan getropft, wobei das Produkt als weißer, feinkristalliner Feststoff ausfiel, der abfiltriert und bei 30°C im Vakuum getrocknet wurde.
(Gewichtsverhältnis TBME/H₂O: 1,04)
Ausbeute: 464,7 g (75,4 % der Theorie)

C₁₆H₄₄O₄Si₅

M = 440,95 g/mol
Schmzp. 142-143°C
¹H-NMR (DMSO-d₆): = 0,0 ppm (s, 6H, Si(CH₃)); 0,38 ppm (m, 4H, Si(CH₂)₂Si); 5,22 ppm (s, 1H, Si(OH))

### Beispiel 3:

### Synthese von Si[(CH₂)₂Si(CH₃)₂OH]₄ mit NaHCO₃ als Base

Zu einer intensiv gerührten Mischung, bestehend aus einer Lösung von 16,38 g (195 mmol) NaHCO₃ in 200 ml H₂O und 200 ml (148 g) TBME, wurden langsam bei Raumtemperatur 10 g (19,4 mmol) Si[(CH₂)₂Si(CH₃)₂Cl]₄ (aus Beispiel 1), gelöst in 50 ml (37 g) TBME, getropft, wobei ein Temperaturanstieg auf 28°C erfolgte. Anschließend wurde noch 1 h bei Raumtemperatur gerührt, im Scheidetrichter die organische Phase separiert und über Na₂SO₄ getrocknet. Nach Abfiltrieren des Trocknungsmittels wurde die organische Phase in 1 l n-Hexan getropft, wobei das Produkt als weißer, feinkristalliner Feststoff ausfiel, der abfiltriert und bei 30°C im Vakuum getrocknet wurde.
(Gewichtsverhältnis TBME/H₂O: 0,93)
Ausbeute: 5,2 g (60,7 % der Theorie)
Schmzp. 141-142°C

### Beispiel 4:

### Synthese von Si[(CH₂)₂Si(CH₃)₂OH]₄ mit Na₂CO₃ als Base

30,94 g (292 mmol) Na₂CO₃ in 1000 ml H₂O und 1000 ml (740 g) TBME wurden bei Raumtemperatur vorgelegt und zu der intensiv gerührten Mischung unter Argon 50 g (97,1 mmol) Si[(CH₂)₂Si(CH₃)₂Cl]₄ (aus Beispiel 1) in 250 ml (185 g) TBME getropft. Danach wurde noch 1 h gerührt, die organische Phase abgetrennt, über Na₂SO₄ getrocknet und anschließend in 5 l n-Hexan getropft, wobei das Produkt als weißer, feinkristalliner Feststoff ausfiel, der abfiltriert und bei 30°C im Vakuum getrocknet wurde.
(Gewichtsverhältnis TBME/H₂O: 0,93)
Ausbeute: 33,1 g (77,3 % der Theorie)
Schmzp. 142-143°C

### Beispiel 5:

### Synthese von Si[(CH₂)₂Si(CH₃)₂OH]₄ mit Na₂CO₃ und NaOH als Base

Zu einer intensiv gerührten Mischung, bestehend aus einer Lösung von 2,34 g (58,5 mmol) NaOH und 1,55 g (14,6 mmol) Na₂CO₃ in 200 ml H₂O und 200 ml (148 g) TBME, wurden unter Argon bei Raumtemperatur 10 (19,4 mmol) Si[(CH₂)₂Si(CH₃)₂Cl]₄ (aus Beispiel 1) in 50 ml (37 g) TBME getropft, anschließend noch 1 h gerührt, die organische Phase abgetrennt, über Na₂SO₄ getrocknet und in 1000 ml n-Hexan getropft, wobei das Produkt als weißer Feststoff ausfiel. Dieser wurde abfiltriert und bei 70°C getrocknet.
Ausbeute: 6,3 g (73,5 % der Theorie)
(Gewichtsverhältnis TBME/H₂O: 0,93)
Schmzp. 141-142°C

### Beispiel 6:

### Synthese von Si[(CH₂)₂Si(CH₃)₂OH]₄ mit NH₃ als Base

Unter Schutzgasatmosphäre wurden 200 g (1,468 mol) Tetravinylsilan, 480 ml (355,2 g) TBME und 0,1 ml Silopren U Katalysator Pt/S vorgelegt und unter Rühren insgesamt 556 g (5,876 mol) (CH₃)₂SiHCl zugetropft. Zum Starten der Reaktion wurden zunächst bei Raumtemperatur etwa 30 ml (CH₃)₂SiHCl schnell zugegeben, wobei durch das Einsetzen der exothermen Reaktion die Temperatur auf etwa 32°C anstieg. Die restliche Menge (CH₃)₂SiHCl wurde so schnell zugetroft, daß die Temperatur kontinuierlich bis auf etwa 60°C anstieg. Anschließend wurde noch 2 h unter Rückfluß erhitzt. Die auf Raumtemperatur abgekühlte Reaktionsmischung wurde mit 300 ml (222 g) TBME verdünnt und innerhalb von 1,5 h zu einer intensiv gerührten Mischung, bestehend aus 473,5 g (27,8 mol) NH₃ in 2900 ml H₂O und 2600 ml (1924 g) TBME, getropft. Anschließend wurde noch 1 h gerührt, die wäßrige Phase abgetrennt, die organische Phase zweimal mit je 1000 ml H₂O gewaschen und anschließend über Na₂SO₄ getrocknet. Nach Abfiltrieren des Trocknungsmittel wurde die organische Phase in 10 l n-Hexan getropft, wobei das Produkt als weißer Feststoff ausfiel, der abfiltriert und im Vakuum bei 30°C getrocknet wurde.
(Gewichtsverhältnis TBME/H₂O: 0,86)
Ausbeute: 359 g (55,5 % der Theorie, bezogen auf Tetravinylsilan)
Schmzp. 141-143°C

### Beispiel 7:

### Synthese von Si[(CH₂)₂Si(CH₃)₂OH]₄ mit NH₃ als Base

Zu einer Vorlage von 170 ml (125,8 g) TBME und 0,05 ml Silopren U Katalysator Pt/S wurde unter Schutzgasatmosphäre und unter Erhitzen auf Rückfluß eine Mischung von 25 g (183 mmol) Tetravinylsilan und 69,9 g (739 mmol) (CH₃)₂SiHCl getropft. Anschließend wurde noch 1 h unter Rückfluß gerührt, auf Raumtemperatur abgekühlt und das Reaktionsgemisch zu einer intensiv gerührten Mischung, bestehend aus 430 ml (318,2 g) TBME und 400 g einer wäßrigen Lösung, die 60,8 g (3,576 mol) NH₃ enthielt, getropft. Anschließend wurde noch 1 h gerührt, danach die wäßrige Phase abgetrennt, die organische Phase je einmal mit 400 ml H₂O und 400 ml einer konzentrierten, wäßrigen NaCl-Lösung gewaschen, über Na₂SO₄ getrocknet und in 1100 ml n-Hexan getropft. Der dabei ausgefallene Feststoff wurde abfiltriert und im Vakuum bei 30°C getrocknet.
(Gewichtsverhältnis TBME/H₂O: 1,31)
Ausbeute: 54,8 g (67,8 % der Theorie, bezogen auf Tetravinylsilan)
Schmzp. 142-143°C

### Beispiel 8:

### Synthese von cyclo-{OSi(CH₃)[(CH₂)₂Si(CH₃)₂(OH)]}₄ mit NH₃ als Base

Zu einer Mischung, bestehend aus 689 g (2 mol) cyclo-{OSi(CH₃)(C₂H₃)}₄, 1200 ml (888 g) TBME und 0,2 ml Silopren U Katalysator Pt/S, wurden bei 45°C unter Rühren 788 g (8,33 mol) (CH₃)₂SiHCl getropft. Die Reaktionstemperatur stieg dabei kontinuierlich auf 60°C an. Nach beendeter Zugabe wurde noch 1 h unter Rückfluß erhitzt, auf Raumtemperatur abgekühlt und das Reaktiongemisch langsam zu einem intensiv gerührten Zweiphasenmischung, bestehend aus 3000 ml (2220 g) TBME und 3750 g einer wäßrigen NH₃-Lösung, die 681 g (40 mol) NH₃ enthielt, getropft. Anschließend wurde noch 1 h bei Raumtemperatur gerührt, die Phasen getrennt, die organische Phase je einmal mit 3500 ml H₂O und 3500 ml einer ca. 5 %igen NaCl-Lösung gewaschen und über Na₂SO₄ getrocknet.

Nach Abfiltrieren des Trocknungsmittels wurden flüchtige Bestandteile im Vakuum bei 25°C abkondensiert. Man erhielt ein klares, schwach gelblich gefärbtes, hochviskoses Öl, das noch etwa 5 % TBME enthielt.
(Gewichtsverhältnis TBME/H₂O: 1,01)
Ausbeute: 1294 g Öl (theoretische Ausbeute: 1296,4 g)
¹H-NMR (DMSO-d₆): = 0,0 ppm (s, 6H, Si(CH₃)₂); 0,08 ppm (s, 3H, Si(CH₃)); 0,43 ppm (m, 4H, Si(CH₂)₂Si); 5,25 ppm (s, 1H, Si(OH)).

### Vergleichsbeispiel 1: (entsprechend DE A 196 03 242)

### Synthese von Si[(CH₂)₂Si(CH₃)₂OH]₄

94,3 g (183,4 mmol) Si[(CH₂)₂Si(CH₃)₂Cl]₄ werden in 100 ml (70,8 g) Diethylether (Et₂O) gelöst und bei Raumtemperatur unter kräftigem Rühren zu einer Lösung von 110,3 ml (729,3 mmol) Triethylamin, 15,3 g (850 mmol) H₂O und 3630 ml (2686,2 g) TBME getropft. Das sich bildende Triethylaminhydrochlorid fiel sofort als weißer voluminöser Niederschlag aus. Das Zutropfen erfolgte so rasch, daß die Reaktionstemperatur zwischen 25°C und 30°C lag. Nach vollständiger Zugabe wurde noch eine Stunde weitergerührt, der Niederschlag über eine Fritte abfiltriert und dieser zweimal mit je 500 ml TBME gewaschen. Nach dem Entfernen der flüchtigen Bestandteile im Vakuum bei ca. 35°C erhielt man aus dem Filtrat das Rohprodukt als weißen Feststoff. Dieser wurde in 120 ml THF gelöst und unter kräftigem Rühren in 3 1 Hexan getropft. Der so erhaltene feine, weiße Niederschlag wurde abfiltriert, mit Hexan gewaschen und dann im Vakuum getrocknet.
(Gewichtsverhältnis (TBME+Et₂O)/H₂O: 180,2)
Ausbeute: 40,5 g (50,2 % der Theorie)
Schmzp. 139-141°C

### Vergleichsbeispiel 2: (entsprechend DE A 196 03 241)

### Synthese von cyclo-{OSi(CH₃)[(CH₂)₂Si(CH₃)₂(OH)]}₄

Zu einer Mischung bestehend aus 87,4 ml (63,6 g; 628,3 mmol) Triethylamin, 12,1 ml (12,1 g; 672,2 mmol) H₂O und 2850 ml (2109 g) TBME tropfte man innerhalb einer Stunde 105 g (145,2 mmol) cyclo-{OSi(CH₃)[(CH₂)₂SiCl(CH₃)₂)]}₄ (hergestellt analog Beispiel 6 in DE A 196 03 241.5) in 100 ml (70,8 g) Diethylether (Et₂O). Nach Ende der Zugabe rührte man noch eine Stunde und filtrierte dann den voluminösen Niederschlag, bestehend aus Triethylaminhydrochlorid, ab. Nach Waschen des Niederschlages mit zweimal je 400 ml TBME entfernte man die flüchtigen Bestandteile im Vakuum mittels Rotationsverdampfer, nahm den öligen Rückstand in ca. 50 ml THF auf und filtrierte über Kieselgel. Nach dem erneuten Entfernen aller flüchtigen Bestandteile im Vakuum erhielt man das Produkt als viskoses Öl.
(Gewichtsverhältnis (TBME+Et₂O)/H₂O: 180,1)
Ausbeute: 64,3 g Öl (theoretische Ausbeute: 94,1 g)

## Patentansprüche

1. Verfahren zur Herstellung von Carbosilan-Dendrimeren der Formel (I)
K[(CH₂)ₙSiXₐR₃₋ₐ]ᵢ (I)
mit n = 2-6 und R = C₁-C₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:
A)
K = [R₄₋ᵢSi]
mit i = 3-4
oder
B) K = 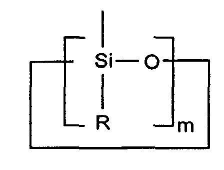 mit i = m = 3-6
und
a)
X = (OH)
und a = 1
oder
b)
X = [(CH₂)ₙSi(OH)R₂]
und a = 1-3
oder
c)
X = [(CH₂)ₙSiR₃₋ₐ[(CH₂)ₙSi(OH)R₂]ₐ]
und a = 1-3
oder
d)
X = [(CH₂)ₙSiR₃₋ₐ[(CH₂)ₙSiR₃₋ₐ[(CH₂)ₙSi(OH)R₂]ₐ]ₐ]
und a = 1-3
durch die Umsetzung von Carbosilan-Dendrimeren der Formeln (II)
K[(CH₂)ₙSiYₐR₃₋ₐ]ᵢ (II)
mit n = 2-6 und R = C₁-C₁₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:
A)
K = [R₄₋ᵢSi]
mit i = 3-4
oder
B) K = 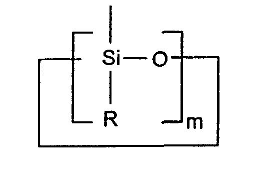 mit i = m =3-6
und
a)
Y = Cl, Br, I
und a = 1
oder
b)
Y = [(CH₂)ₙSi(Z)R₂]
mit Z = Cl, Br, I und a = 1-3
oder
c)
Y = [(CH₂)ₙSiR₃₋ₐ[(CH₂)ₙSi(Z)R₂]ₐ]
mit Z = Cl, Br, I und a = 1-3
oder
d)
Y = [(CH₂)ₙSiR₃₋ₐ[(CH₂)ₙSiR₃₋ₐ[(CH₂)ₙSi(Z)R₂]ₐ]ₐ]
mit Z = Cl, Br, I und a = 1-3
mit Wasser in Gegenwart einer Base oder eines Basengemisches und einem organischen Lösemittel, **dadurch gekennzeichnet, dass** organisches Lösemittel und Wasser in einem Gewichtsverhältnis von 0,5 bis 1,4 eingesetzt werden.

2. Verfahren nach Anspruch 1, **dadurch gekennzeichnet, dass** als Basen NH₃, Alkalihydroxide, Ammonium- und Alkalicarbonate, -hydrogencarbonate, -phosphate, -hydrogenphoshate und/oder -acetate eingesetzt werden.

3. Verfahren nach Anspruch 1 oder 2, **dadurch gekennzeichnet, dass** als organisches Lösungsmittel aliphatische Ether eingesetzt werden.

4. Verfahren nach einem oder mehreren der Ansprüche 1 bis 3, **dadurch gekennzeichnet, dass** die Basen, bezogen auf die bei der Hydrolyse freigesetzte Menge an Säure, stöchiometrisch oder im Überschuss eingesetzt werden.

5. Verfahren zur Herstellung von Carbosilan-Dendrimeren der Formel (I),
K[(CH₂)ₙSiXₐR₃₋ₐ]ᵢ (I)
mit n = 2-6 und R = C₁-C₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:
A)
K = [R₄₋ᵢSi]
mit i = 3-4
oder
B) K = 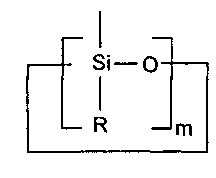 mit i m = 3-6
und
a)
X = (OH)
und a = 1
oder
b)
X = [(CH₂)ₙSi(OH)R₂]
und a = 1-3
oder
c)
X = [(CH₂)ₙSiR₃₋ₐ[(CH₂)ₙSi(OH)R₂]ₐ]
und a = 1-3
oder
d)
X = [(CH₂)ₙSiR₃₋ₐ[(CH₂)ₙSiR₃₋ₐ[(CH₂)ₙSi(OH)R₂]ₐ]ₐ]
und a = 1-3
wobei zunächst Carbosilan-Dendrimere der Formel (II),
K[(CH₂)ₙSiYₐR₃₋ₐ]ᵢ (II)
mit n = 2-6 und R = C₁-C₁₈-Alkyl und/oder C₆-C₂₀-Aryl, wobei die Werte n und die Reste R innerhalb des Moleküls gleich oder ungleich sein können und wobei die weiteren Symbole und Indizes die folgenden Bedeutungen haben:
A)
K = [R₄₋ᵢSi]
mit i = 3-4
oder
B) K = 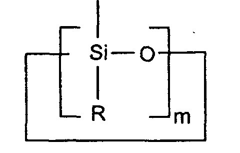 mit i = m = 3-6
und
a)
Y = Cl, Br, l
und a = 1
oder
b)
Y = [(CH₂)ₙSi(Z)R₂]
mit Z = Cl, Br, I und a = 1-3
oder
c)
Y = [(CH₂)ₙSiR₃₋ₐ[(CH₂)ₙSi(Z)R₂]ₐ]
mit Z = Cl, Br, I und a = 1-3
oder
d)
Y = [(CH₂)ₙSiR₃₋ₐ[(CH₂)ₙSiR₃₋ₐ[(CH₂)ₙSi(Z)R₂]ₐ]ₐ]
mit Z = Cl, Br, I und a = 1-3
durch Umsetzung ungesättigter Silane mit Halogenhydridosilanen in Gegenwart von homogenen Katalysatoren hergestellt werden und diese anschließend mit Wasser in Gegenwart einer Base oder eines Basengemisches und einem organischen Lösemittel umgesetzt werden, **dadurch gekennzeichnet, dass** organische Lösemittel und Wasser in einem Gewichtsverhältnis von 0,5 bis 1,4 eingesetzt werden.

6. Verfahren nach Anspruch 5, **dadurch gekennzeichnet, dass** als homogene Katalysatoren Platinkomplexe in vinylgruppenhaltiger Siloxanmatrix eingesetzt werden.

## Claims

1. Process for the preparation of carbosilane dendrimers of the formula (I)
K[(CH₂)ₙSiXₐR₃₋ₐ]ᵢ (I)
where n = 2 - 6 and R = C₁-C₈-alkyl and/or C₆-C₂₀-aryl, wherein the values n and the radicals R may be the same or different within the molecule, and wherein the further symbols and indices denote the following:
A)
K = [R₄₋ᵢSi]
where i = 3 - 4
or
B) K = 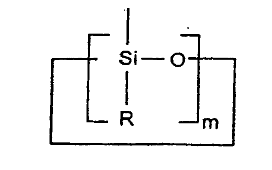 where i = m = 3 - 6
and
a)
X = (OH)
and a = 1
or
b)
X = [(CH₂)ₙSi(OH)R₂]
and a = 1 - 3
or
c)
X = [(CH₂)ₙSiR₃₋ₐ[(CH₂)ₙSi(OH)R₂]ₐ]
and a = 1 - 3
or
d)
X = [(CH₂)ₙSiR₃₋ₐ[(CH₂)ₙSiR₃₋ₐ[(CH₂)ₙSi(OH)R₂]ₐ]ₐ]
and a = 1 - 3
by reacting carbosilane dendrimers of the formula (II)
K[(CH₂)ₙSiYₐR₃₋ₐ]ᵢ (II)
where n = 2 - 6 and R = C₁-C₁₈-alkyl and/or C₆-C₂₀-aryl, wherein the values n and the radicals R may be the same or different within the molecule, and wherein the further symbols and indices denote the following:
A)
K = [R₄₋ᵢSi]
where i = 3 - 4
or
B) K = 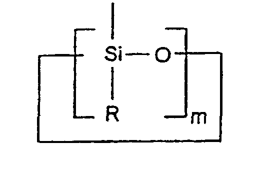 where i = m = 3 - 6
and
a)
Y = Cl, Br, I
and a = 1
or
b)
Y = [(CH₂)ₙSi(Z)R₂]
where Z = Cl, Br, I and a = 1 - 3
or
c)
Y = [(CH₂)ₙSiR₃₋ₐ[(CH₂)ₙSi(Z)R₂]ₐ]
where Z = Cl, Br, I and a = 1 - 3
or
d)
Y = [(CH₂)ₙSiR₃₋ₐ[(CH₂)ₙSiR₃₋ₐ[(CH₂)ₙSi(Z)R₂]ₐ]ₐ]
where Z = Cl, Br, I and a = 1 - 3
with water in the presence of a base or a base mixture and an organic solvent, **characterised in that** organic solvent and water are utilised in a ratio by weight of from 0.5 to 1.4.

2. Process according to Claim 1, **characterised in that** NH₃, alkali metal hydroxides, and ammonium- and alkali metal carbonates, -hydrogen carbonates, -phosphates, -hydrogen phosphates and/or -acetates are utilised as bases.

3. Process according to Claim 1 or 2, **characterised in that** aliphatic ethers are utilised as the organic solvent.

4. Process according to one or more of Claims 1 to 3, **characterised in that** the bases are utilised in a stoichiometric quantity or in an excess, in relation to the quantity of acid liberated by the hydrolysis.

5. Process for the preparation of carbosilane dendrimers of the formula (I)
K[(CH₂)ₙSiXₐR₃₋ₐ]ᵢ (I)
where n = 2 - 6 and R = C₁-C₈-alkyl and/or C₆-C₂₀-aryl, wherein the values n and the radicals R may be the same or different within the molecule, and wherein the further symbols and indices denote the following:
A)
K = [R₄₋ᵢSi]
where i = 3 - 4
or
B) K = 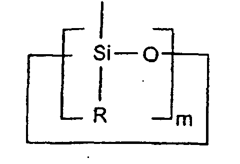 where i = m = 3 - 6
and
a)
X = (OH)
and a = 1
or
b)
X = [(CH₂)ₙSi(OH)R₂]
and a = 1 - 3
or
c)
X = [(CH₂)ₙSiR₃₋ₐ[(CH₂)ₙSi(OH)R₂]ₐ]
and a = 1 - 3
or
d)
X = [(CH₂)ₙSiR₃₋ₐ[(CH₂)ₙSiR₃₋ₐ[(CH₂)ₙSi(OH)R₂]ₐ]ₐ]
and a = 1 - 3,
wherein carbosilane dendrimers of the formula (II)
K[(CH₂)ₙSiYₐR₃₋ₐ]ᵢ (II)
where n = 2 - 6 and R = C₁-C₁₈-alkyl and/or C₆-C₂₀-aryl, wherein the values n and the radicals R may be the same or different within the molecule, and wherein the further symbols and indices denote the following:
A)
K = [R₄₋ᵢSi]
where i = 3 - 4
or
B) K = 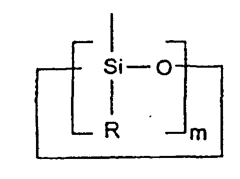
where i = m = 3 - 6
and
a)
Y = Cl, Br, I
and a = 1
or
b)
Y = [(CH₂)ₙSi(Z)R₂]
where Z = Cl, Br, I and a = 1 - 3
or
c)
Y = [(CH₂)ₙSiR₃₋ₐ[(CH₂)ₙSi(Z)R₂]ₐ]
where Z = Cl, Br, I and a = 1- 3
or
d)
Y = [(CH₂)ₙSiR₃₋ₐ[(CH₂)ₙSiR₃₋ₐ[(CH₂)ₙSi(Z)R₂]ₐ]ₐ]
where Z = Cl, Br, I and a = 1 - 3
are first prepared by the reaction of unsaturated silanes with halohydridosilanes in the presence of homogeneous catalysts, and these are then reacted with water in the presence of a base or a base mixture and an organic solvent, **characterised in that** organic solvents and water are utilised in a ratio by weight of from 0.5 to 1.4.

6. Process according to Claim 5, **characterised in that** platinum complexes in a vinyl group-containing siloxane matrix are utilised as homogeneous catalysts.

## Revendications

1. Procédé pour la préparation de carbosilanes dendrimères de formule (I)
K[(CH₂)ₙSiXₐR₃₋ₐ]ᵢ (I)
dans laquelle n = 2 à 6 et R = alkyle en C₁ à C₈ et/ou aryle en C₆ à C₂₀, les significations de n et R pouvant être identiques ou différentes à l'intérieur de la molécule, les autres symboles et indices ayant les significations suivantes :
A)
K = [R₄₋ᵢSi]
avec i = 3 à 4
ou bien
B) K = 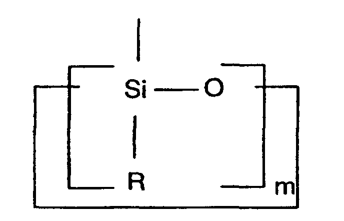 avec i = m=3 à 6
et
a)
X = (OH)
et a = 1
ou bien
b)
X = [(CH₂)ₙSi(OH)R₂]
et a = 1 à 3
ou bien
c)
X = [(CH₂)ₙSiR₃₋ₐ[(CH₂)ₙSi(OH)R₂]ₐ]
et a = 1 à 3
ou bien
d)
X = [(CH₂)ₙSiR₃₋ₐ[(CH₂)ₙSiR₃₋ₐ[(CH₂)ₙSi(OH)R₂]ₐ]ₐ]
et a = 1 à 3,
par réaction de carbosilanes dendrimères de formule (II)
K[(CH₂)ₙSiYₐR₃₋ₐ]ᵢ (II)
dans laquelle n = 2 à 6 et R = alkyle en C₁-C₁₈ et/ou aryle en C₆-C₂₀, les significations de n et de R pouvant être identiques ou différentes à l'intérieur de la molécule, les autres symboles et indices ayant les significations suivantes :
A)
K = [R₄₋ᵢSi]
avec i=3 à 4
ou bien
B) K = 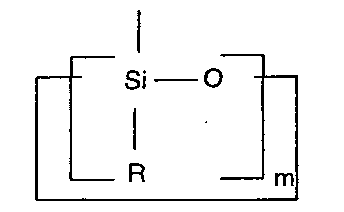 avec i = m = 3 à 6
et
a)
Y = Cl, Br, I
et a = 1
ou bien
b)
Y = [(CH₂)ₙSi(Z)R₂]
avec Z = Cl, Br, I et a = 1 à 3
ou bien
c)
Y = [(CH₂)ₙSiR₃₋ₐ[(CH₂)ₙSi(Z)R₂]ₐ]
avec Z = Cl, Br, I et a = 1 à 3
ou bien
d)
Y = [(CH₂)ₙSiR₃₋ₐ[(CH₂)ₙSiR₃₋ₐ[(CH₂)ₙSi(Z)R₂]ₐ]ₐ]
avec Z = Cl, Br, I et a = 1 à 3
avec l'eau en présence d'une base ou d'un mélange de bases et d'un solvant organique, **caractérisé en ce que** le solvant organique et l'eau sont mis en oeuvre à des proportions relatives en poids de 0,5 à 1,4.

2. Procédé selon la revendication 1, **caractérisé en ce que** les bases utilisées sont NH₃, des hydroxydes alcalins, des carbonates, bicarbonates, phosphates, hydrogénophosphates et/ou acétates de métaux alcalins ou d'ammonium.

3. Procédé selon la revendication 1 ou 2, **caractérisé en ce que** le solvant organique utilisé est un éther aliphatique.

4. Procédé selon une ou plusieurs des revendications 1 à 3, **caractérisé en ce que** les bases sont mises en oeuvre en quantité stoechiométrique ou en excès par rapport à l'acide libéré à l'hydrolyse.

5. Procédé pour la préparation des carbosilanes dendrimères de formule (I)
K[(CH₂)ₙSiXₐR₃₋ₐ]ᵢ (I)
dans laquelle n = 2 à 6 et R = alkyle en C₁ à C₈ et/ou aryle en C₆ à C₂₀, les significations de n et R pouvant être identiques ou différentes à l'intérieur de la molécule, les autres symboles et indices ayant les significations suivantes :
A)
K = [R₄₋ᵢSi]
avec i = 3 à 4
ou bien
B) K = 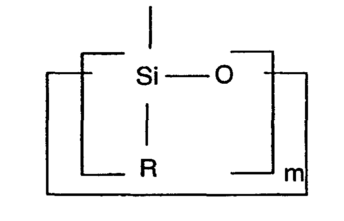 avec i = m = 3 à 6
et
a)
X = (OH)
et a = 1
ou bien
b)
X = [(CH₂)ₙSi(OH)R₂]
et a = 1 à 3
ou bien
c)
X = [(CH₂)ₙSiR₃₋ₐ[(CH₂)ₙSi(OH)R₂]ₐ]
et a = 1 à 3
ou bien
d)
X = [(CH₂)ₙSiR₃₋ₐ[(CH₂)ₙSiR₃₋ₐ[(CH₂)ₙSi(OH)R₂]ₐ]ₐ]
et a = 1 à 3
selon lequel on prépare d'abord des carboxsilanes dendrimères de formule (II),
K[(CH₂)ₙSiYₐR₃₋ₐ]ᵢ (II)
dans laquelle n = 2 à 6 et R = alkyle en C₁ à C₁₈ et/ou aryle en C₆ à C₂₀, les significations de n et R pouvant être identiques ou différentes à l'intérieur de la molécule, et les autres symboles et indices ayant les significations suivantes :
A)
K = [R₄₋ᵢSi]
avec i = 3 à 4
ou bien
B) K = 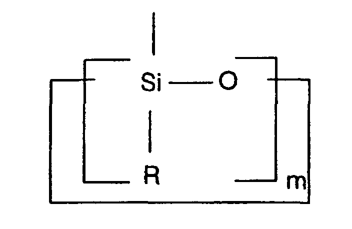 avec i = m = 3 à 6
et
a)
Y = Cl, Br, I
et a = 1
ou bien
b)
Y = [(CH₂)ₙSi(Z)R₂]
avec Z = Cl, Br, I et a = 1 à 3
ou bien
c)
Y = [(CH₂)ₙSiR₃₋ₐ[(CH₂)ₙSi(Z)R₂]ₐ]
avec Z = Cl, Br, I et a = 1 à 3
ou bien
d)
Y = [(CH₂)ₙSiR₃₋ₐ[(CH₂)ₙSiR₃₋ₐ[(CH₂)ₙSi(Z)R₂]ₐ]ₐ]
avec Z = Cl, Br, I et a = 1 à 3
par réaction de silanes insaturés avec des halogénohydrurosilanes en présence de catalyseurs homogènes, après quoi on les fait réagir avec l'eau en présence d'une base ou d'un mélange de bases et d'un solvant organique,
ce procédé se caractérisant en ce que le solvant organique et l'eau sont mis en oeuvre à des proportions relatives en poids de 0,5 à 1,4.

6. Procédé selon la revendication 5, **caractérisé en ce que** l'on utilise en tant que catalyseurs homogènes des complexes de platine dans une gangue de siloxane à groupes vinyle.
